# EUROPÄISCHE PATENTANMELDUNG

(11) **EP 2 913 229 A1**
(43) Veröffentlichungstag der Anmeldung: **02.09.2015**
(21) Anmeldenummer: 15163840.0
(22) Anmeldetag: 26.08.2010
(51) Int. Cl.: B60R 16/023

(54) **ELEKTRISCHES BAUTEIL ALS HALBZEUG FÜR EINEN STROMVERTEILER**

(30) Priorität: 03.09.2009 DE 102009029166
(62) Teilanmeldung aus: 10750092.8
(71) Anmelder: Lisa Dräxlmaier GmbH, 84137 Vilsbiburg (DE)
(72) Erfinder: Froschmeier, Hubert, 84405 Dorfen (DE); Füssl, Peter, 84137 Vilsbiburg (DE)
(74) Vertreter: Hoffmann Eitle

(57) **Zusammenfassung**

Elektrisches Bauteil als Halbzeug zur Weiterverarbeitung in Fahrzeugen, mit einer Stromschiene (210a - 210e) und einem daran angebrachten Lamellenkontakt (200a - 200e), wobei die Stromschiene (210a - 210e) als Doppelschiene und/oder U-förmig ausgebildet ist.

## Beschreibung

### TECHNISCHES GEBIET

Die vorliegende Erfindung betrifft ein elektrisches Bauteil, das als Halbzeug für einen Stromverteiler anwendbar ist. Ein solcher Stromverteiler zur Verwendung in Fahrzeugen weist insbesondere ein eine zentrale Stromzufuhr aufweisendes Basismodul und wenigstens zwei an das Basismodul lösbar anbringbare Universalmodule auf.

### HINTERGRUND DER ERFINDUNG

Stromverteiler der angesprochenen Art bilden Knotenpunkte für das elektrische Netzwerk in Kraftfahrzeugen. Sie enthalten mehrere Anschlüsse zur Verbindung mit Verbrauchern und/oder einem oder mehreren Kabelbäumen, zumindest eine Stromzufuhr und ggf. verschiedene elektrische Bauelemente, wie beispielsweise Sicherungen, Relais oder elektronische Bauelemente.

Aus der EP 0 972 682 B1 ist eine Zentralelektrik für Kraftfahrzeuge bekannt, die ein Hauptgerät und daran elektrisch und mechanisch ankoppelbare Nebengeräte aufweist. Das Hauptgerät weist einen parallel zu seiner Längserstreckung verlaufenden, zur Aufnahme von elektrischen Leitern vorgesehenen Leiterkanal auf, wobei an einer Längsseite des Leiterkanals Kupplungsstellen zum Anschluss der Nebengeräte vorhanden sind. Die Nebengeräte sind kompatibel ausgeführt, und die Kupplungsstellen am Hauptgerät sind identisch ausgebildet, so dass die Nebengeräte an eine beliebige Kupplungsstelle angeschlossen werden können. Die Nebengeräte weisen jeweils zumindest eine Sicherung auf. Das Hauptgerät führt im Leiterkanal mehrere elektrische Leiter auf unterschiedlichem Potential.

Die in der EP 0 972 682 B1 offenbarte Zentralelektrik bildet den Oberbegriff des Anspruchs 1. Eine vergleichbare Schaltkreisanordnung geht aus der EP 0 495 422 A2 hervor.

Die EP 0 972 682 B1 beschreibt als Aufgabe, eine Zentralelektrik zu schaffen, deren Hauptgerät eine elektrische und mechanische Ankopplung von zugehörigen Nebengeräten auf flexible und modulare Art und Weise ermöglicht, so dass jedes zur Kupplung mit dem Hauptgerät vorgesehene Nebengerät einer beliebigen freien Kupplungsstelle zugeordnet werden kann.

Die EP 1029 743 A2 beschreibt ein modulares System mit mehreren elektrischen Funktionseinheiten. Jede der Funktionseinheiten ist mit einer bevorzugt standardisierten mechanischen und/oder elektrischen Schnittstelle ausgestattet.

Die DE 44 22 434 C1 beschreibt elektrische Einrichtungen, die mit einer Zentralelektrik verbindbar und davon lösbar sind, wobei eine Leiterplatte in das Gehäuse der Zentralelektrik einsetzbar ist, die mit elektrischen/elektronischen Bauelementen bestückt sein kann. Ferner sind Leiterbahnen im Gehäuse vorgesehen.

Die DE 101 56 233 A1 beschreibt einen elektrischen Steckkörper mit einem ersten Abschnitt und einem zweiten Abschnitt, wobei der erste Abschnitt einen Einsteckschacht für einen flachen Stecker mit einwärts gerichteten Lamellen aufweist und der zweite Abschnitt mit einer Stromschiene verbindbar ist oder damit verbunden ist.

Mit der obigen Modularisierung und Flexibilisierung steigen allerdings der Platzbedarf und die Anzahl der zu verwendenden Komponenten. Der Grund liegt darin, dass die Zentralelektrik hinsichtlich der Verschalung verschiedener elektrischer Elemente nicht auf einen bestimmten Anwendungsfall, beispielsweise eine bestimmte Ausstattungsvariante, optimiert ist.

### KURZE BESCHREIBUNG DER ERFINDUNG

Eine Aufgabe der Erfindung besteht somit darin, ein elektrisches Bauteil als Halbzeug für einen Stromverteiler zur Verwendung in Fahrzeugen zu schaffen, bei dem unter Beibehaltung der Flexibilität möglichst viele Gleichteile verwendet, die Anzahl der benötigten Komponenten verringert und die Kompaktheit verbessert werden können.

Die Aufgabe wird mit einem elektrischen Bauteil nach Anspruch 1 gelöst. Vorteilhafte Ausgestaltungen ergeben sich aus den entsprechenden Unteransprüchen.

Der Stromverteiler weist ein Basismodul mit zumindest einer zentralen Stromzufuhr auf. Die Universalmodule weisen definierte Geometrien auf und sind mit dem Basismodul an dafür vorgesehenen Stellen sowohl mechanisch als auch elektrisch lösbar verbunden. Die Universalmodule können hinsichtlich der darin enthaltenen elektrischen Bauteile wiederum unter Berücksichtigung der angeschlossenen Verbraucher (beispielsweise Sonderausstattung, Anhängerkupplung) individuell gestaltet sein. Es sei darauf hingewiesen, dass unter "elektrische Bauteile" die in Stromverteilern für Fahrzeuge üblicherweise vorgesehenen Bauteile, wie etwa Sicherungen, Relais oder elektronische, wie beispielsweise logische, Bausteine, gemeint sind. Das Basismodul weist neben der zentralen Stromzufuhr zumindest eine Platine und/oder eine Stromschiene (bspw. als Stanzgitter ausgeführt) mit Strom leitenden Pfaden, sowie Kontaktanschlüsse zur Verbindung mit Verbrauchern des Fahrzeugs und/oder zur Verbindung mit einem oder mehreren Kabelbäumen auf. Somit enthält das Basismodul mechanische und elektrische Bauteile, die in mehreren Anwendungsfällen, beispielsweise in jeder Ausstattungsvariante eines Fahrzeugtyps, erforderlich sind und somit von den verschiedenen Universalmodulen gemeinsam genutzt werden können. Auf diese Weise kann die Anzahl der verwendeten Bauelemente verringert und der Stromverteiler kompakter ausgebildet werden, ohne auf die vorteilhafte Flexibilität und Modularität verzichten zu müssen. Mit dem beschriebenen Stromverteiler wird durch den modularen Aufbau des Stromverteilers mit vielen Gleichteilen ein Produkt geschaffen, das je nach Ausstattung des Fahrzeugs ausgehend von einer Basisausstattung über verschiedene angefügte Universalmodule erweitert werden kann.

Vorzugsweise weist die Platine des Basismoduls elektrische Bauteile, wie beispielsweise Sicherungen, Relais oder andere elektronische Bausteine, auf. Somit wird die Anzahl der von den Universalmodulen gemeinsam genutzten Komponenten erhöht und die Kompaktheit des Stromverteilers weiter verbessert.

Vorzugsweise weisen mehrere oder alle Universalmodule identisch ausgebildete Schnittstellen zur mechanischen und elektrischen Verbindung mit dem Basismodul auf, um die Anzahl der verwendeten Gleichteile zu erhöhen und somit die Modularität des Stromverteilers zu verbessern. In einer vorteilhaften Weiterbildung einer solchen Ausgestaltung weisen mehrere oder alle Universalmodule nicht nur definierte Geometrien, sondern identische Geometrien, zumindest im Anschlussbereich, auf. Solche identischen Geometrien können über gemeinsam genutzte Gehäuseformen und/oder Anschlussvarianten erzielt werden. Die Schnittstellen zwischen Basismodul und Universalmodulen können so ausgebildet sein, dass ein Universalmodul an einer beliebigen freien Schnittstelle am Basismodul oder an einer für seine Funktion definierten Schnittstelle angebracht werden kann.

Vorzugsweise erfolgt die elektrische und mechanische Kontaktierung der Universalmodule in dafür vorgesehenen Ausbuchtungen des Basismoduls. Durch diese Maßnahme werden die Kompaktheit des Stromverteilers und die sichere Verbindbarkeit der Universalmodule mit dem Basismodul verbessert.

Vorzugsweise erfolgt die mechanische Verbindung zwischen den Universalmodulen und dem Basismodul über Führungen, wobei im Basismodul jeweils zumindest ein Stift vorgesehen sein kann, der mit einer entsprechenden Öffnung in dem entsprechenden Universalmodul in Eingriff bringbar ist, um bei der Montage einen Endrastpunkt definiert spürbar zu machen. Führung und Stift können aber müssen nicht gemeinsam vorgesehen sein. Der Stift kann in die Öffnung eindringen oder diese durchdringen und ermöglicht neben dem Definieren eines Endrastpunkts eine Verbesserung der Führung. Somit kann das entsprechende Universalmodul sicher und definiert an dem Basismodul lösbar angebracht werden, wobei dadurch die Wahrscheinlichkeit einer Beschädigung der mechanischen und/oder elektrischen Schnittstelle beim Anbring- und/oder Lösevorgang minimiert wird.

Vorzugsweise wird der elektrische Kontakt zwischen den Universalmodulen und dem Basismodul über einen Messerkontakt am Universalmodul und einen Lamellenkontakt an der zur Kontaktierung vorgesehenen Stelle des Basismoduls herbeigeführt. Eine solche Verbindung ist bei kompakter Ausgestaltung zuverlässig und kann mit einer geringen Anzahl von Bauteilen hergestellt werden. Je nach Funktion des Universalmoduls können selbstverständlich mehrere Messerkontakte am Universalmodul und mehrere Lamellenkontakte an einer Verbindungsstelle des Basismoduls vorgesehen sein.

Da in Abhängigkeit von den angeschlossenen Verbrauchern auf der Platine des Basismoduls oder beim Anschluss der Universalmodule unterschiedliche, unter Umständen hohe Stromtragfähigkeiten gefordert sein können, für die die auf der Platine vorgesehenen Leitungswege möglicherweise nicht ausreichend dimensioniert sind, ist vorzugsweise vorgesehen, dass die zur Kontaktierung erforderliche Anzahl von Lamellenkontakten an einer Stromschiene angeordnet ist. Das elektrische Bauteil aus zumindest einem Lamellenkontakt und einer Stromschiene ist so konzipiert, dass die für den bzw. die entsprechenden Verbraucher erforderliche Stromtragfähigkeit gegeben ist. Dazu kann ein Stapel von Lamellenkontakten mit einer für die erforderliche Stromtragfähigkeit entsprechend dimensionierten Stromschiene verbunden sein, die wiederum mit der Platine, beispielsweise über gängige Lötpins oder Einsteckkontakte, verbunden ist. Es sind dabei verschiedene Geometrien bei der Gestaltung der Stromschiene denkbar, beispielsweise Metallband, Doppelschiene, L-förmig, U-förmig. Die Verbindung der Lamellenkontakte mit der Stromschiene kann auch derart gestaltet sein, dass die Lamellenkontakte als Einpresskontakte ausgestaltet sind.

Vor dem Hintergrund der modularen Bauweise des Stromverteilers eignet sich das oben beschriebene elektrische Bauteil, um einen oben beschriebenen aber auch herkömmlichen Stromverteiler oder andere elektrische Komponenten so modular zu erweitern, dass diese für Verbraucher anwendbar ist, für die der beschriebene oder herkömmliche Stromverteiler oder die andere elektrische Komponente ursprünglich nicht ausgelegt waren.

Somit erweist sich das obige elektrische Bauteil aus Stromschiene und Lamellenkontakt nicht nur in Verbindung mit dem beschriebenen Stromverteiler als vorteilhaft, sondern ermöglicht als Halbzeug eine modulare Aufrüstung und somit Erweiterung technischer Spezifikationen elektrischer Komponenten. Dazu wird ein oder mehrere oder ein Stapel von Lamellenkontakten mit einer für die geforderte Stromtragfähigkeit entsprechend dimensionierten Stromschiene verbunden, und die Stromschiene wird entsprechend geformt oder weist geeignete Sollbiegestellen auf, bevor diese mit der Platine verbunden wird. Dieser Aspekt betrifft ein Verfahren zur Erweiterung einer elektrischen Komponente mit dem elektrischen Bauteil aus Stromschiene und Lamellenkontakt.

### KURZE BESCHREIBUNG DER ZEICHNUNGEN

Im Folgenden werden beispielhafte Ausführungsformen anhand von beigefügten Figuren beschrieben.
Fig. 1A zeigt einen modularen Stromverteiler schräg von oben; Figuren 1B und 1C sind zwei Einzeldarstellungen von zwei unterschiedlichen Universalmodulen.
Fig. 2 zeigt einen modularen Stromverteiler, bestehend aus einem Basismodul und sechs Universalmodulen.
Fig. 3 ermöglicht einen Blick in das Basismodul, wobei eine Platine des Basismoduls erkennbar ist.
Figuren 4A und 4B sind Einzeldarstellungen zweier Universalmodule.
Fig. 5 zeigt den Einschub und die Kontaktierung eines Universalmoduls in die Basisplatine.
Fig. 6 zeigt eine Bodenplatte des Basismoduls schräg von unten.
Figuren 7A bis 7E zeigen verschiedene Ausführungsformen von Stromschienen, teilweise in Verbindung mit einem Lamellenkontakt.

### Detaillierte Beschreibung

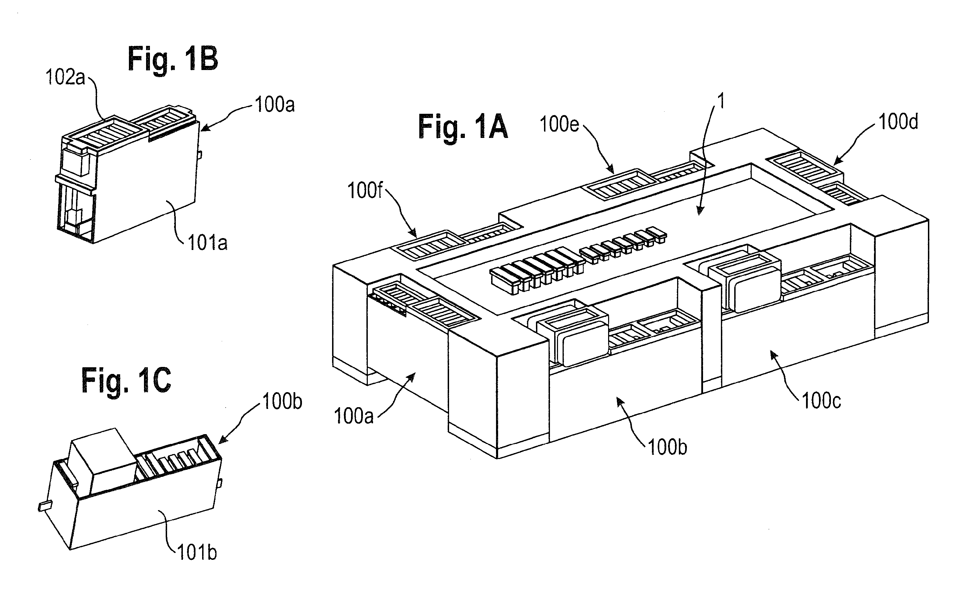

Fig. 1A zeigt einen modularen Stromverteiler in einer Perspektive schräg von oben. Der Stromverteiler weist ein Basismodul 1 und mehrere Universalmodule 100a bis 100f, die an dem Basismodul 1 lösbar angebracht sind, auf. Die Figuren 1B und 1C zeigen Einzeldarstellungen zweier Universalmodule 100a und 100b. Die Universalmodule 100a und 100b weisen jeweils ein Gehäuse 101a bzw. 101b sowie einen Deckel 102a auf. Der Deckel wurde in der Fig. 1C ausgelassen, um einen Blick in das Innere das Universalmoduls 100b zu ermöglichen.

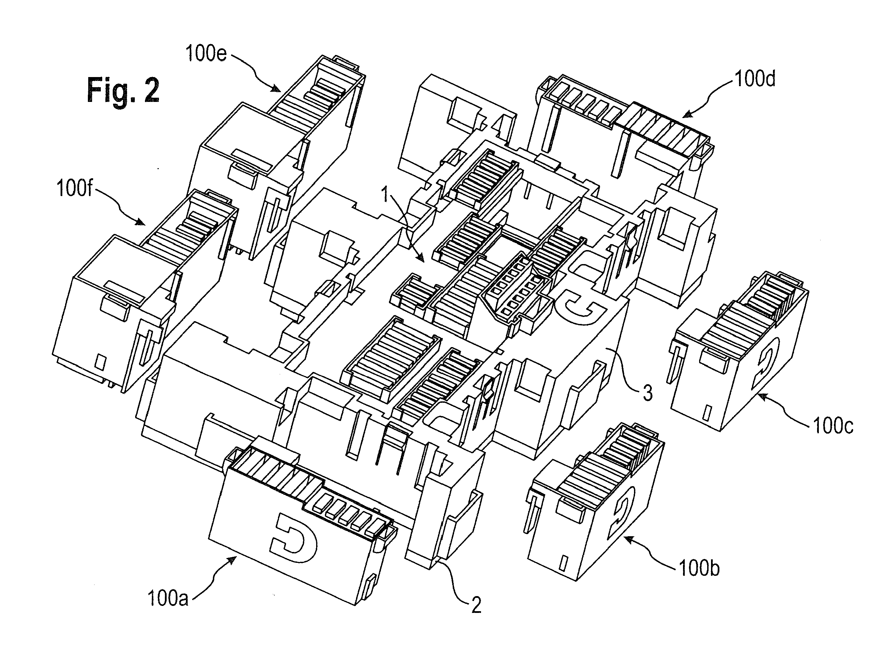

Eine Darstellung mit vom Basismodul 1 getrennten Universalmodulen 100a bis 100f ist in Fig. 2 gezeigt. Das Basismodul weist eine Bodenplatte 2 und eine Abdeckung 3 auf. Wie aus den Figuren hervorgeht, weisen sowohl das Basismodul 1 als auch die Universalmodule 100a bis 100f elektrische Bauteile (z. B. Sicherungen, Relais usw.) und/oder elektronische Bauteile, wie etwa logische Bauteile, auf.

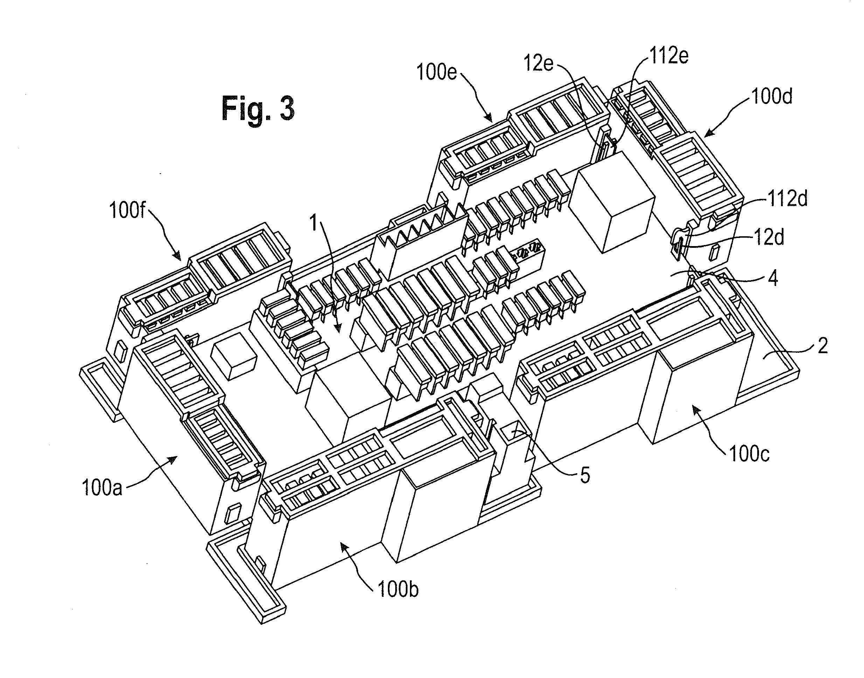

Fig. 3 gewährt einen Blick in das Innere des Basismoduls 1, wobei auf der Bodenplatte 2 eine Platine 4 vorgesehen ist. Nicht dargestellt sind hier Leiterbahnen oder Stromschienen zur Kontaktierung der elektrischen/elektronischen Bauteile. Erkennbar ist die Kontaktierung der Universalmodule 100a bis 100f über einen Messerkontakt an der Platine 4 und einen Lamellenkontakt an der entsprechenden Stelle des Basismoduls 1. Für die Universalmodule 100d und 100e sind die Messerkontakte in der Figur beispielhaft mit 112d und 112e beschriftet. Die entsprechenden Lamellenkontakte zur Aufnahme der Messerkontakte sind mit 12d und 12e beschriftet. Referenzzeichen 5 bezeichnet die zentrale Stromzufuhr des Stromverteilers.

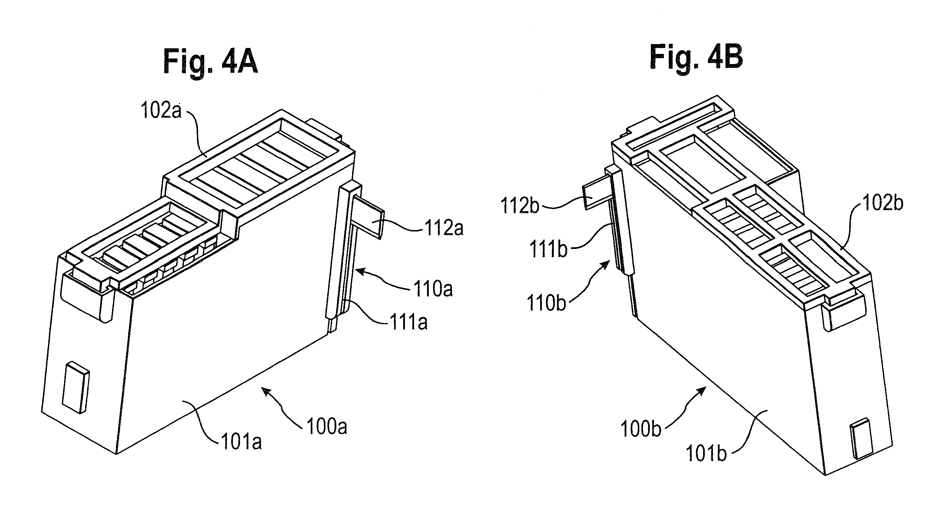

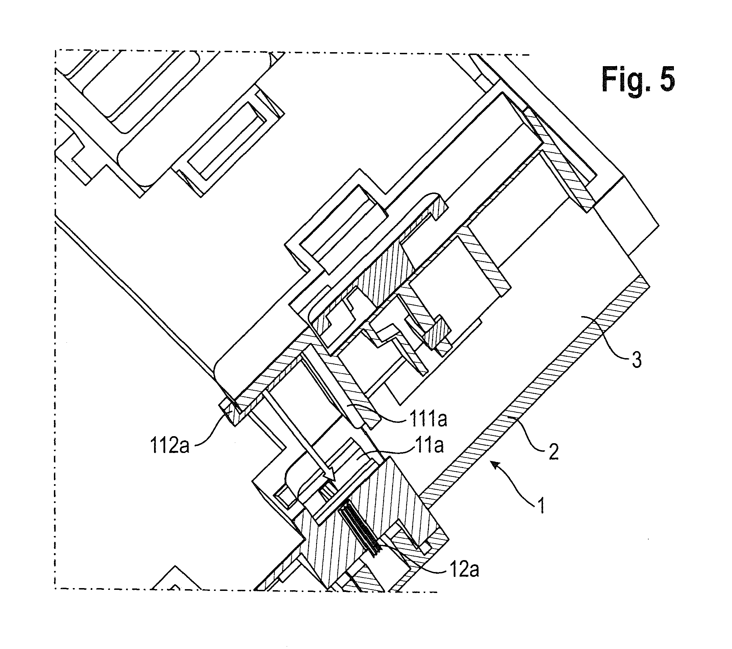

Die Figuren 4A und 4B sind Einzeldarstellungen zweier Universalmodule 100a und 100b. An den beiden Universalmodulen 100a und 100b ist jeweils ein Abschnitt 110a und 110b zur elektrischen und mechanischen Verbindung mit dem Basismodul 1 vorgesehen. Die Abschnitte zur elektrischen und mechanischen Verbindung 110a und 110b weisen jeweils eine mechanische Führung 111a bzw. 111b sowie Messerkontakte 112a bzw. 112b auf. Der Verbindungsvorgang zwischen Universalmodul 100a und Basismodul 1 geht aus der Fig. 5 hervor. Darin ist gezeigt, wie mit Hilfe der Führung 111a und einem entsprechenden Gleitstück 11a am Basismodul 1 das Universalmodul 100a durch Einschieben in eine Ausbuchtung des Basismoduls mit dem Basismodul in Verbindung gebracht wird. Dabei gerät der Messerkontakt 112a des Universalmoduls 100a mit dem Lamellenkontakt 12a in Eingriff.

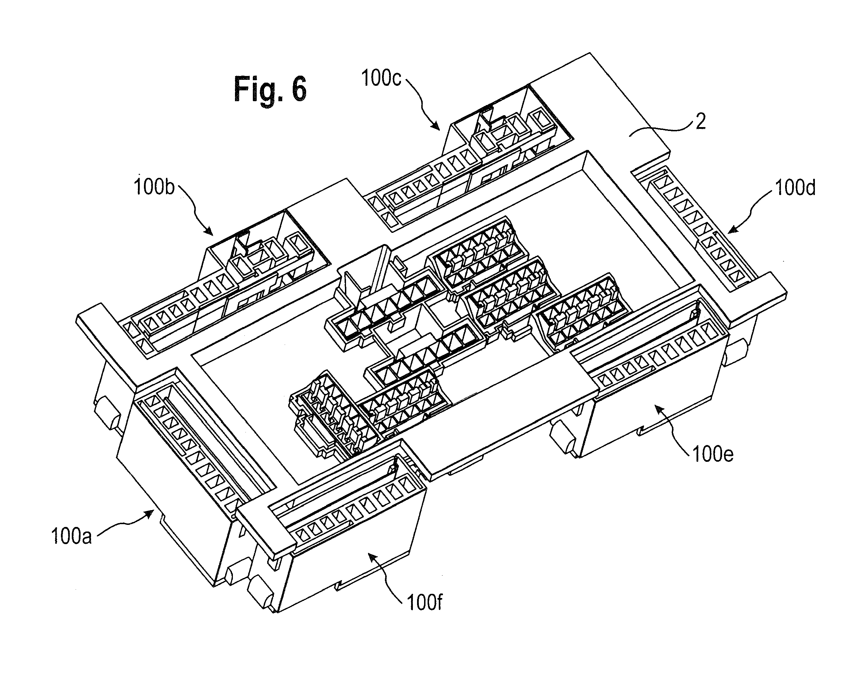

Fig. 6 ist eine perspektivische Ansicht der Bodenplatte des Basismoduls schräg von unten. Über die dargestellten Anschlüsse sowohl auf der Bodenplatte als auch auf der Unterseite der Universalmodule 100a bis 100f erfolgt die Kontaktierung mit dem Kabelbaum bzw. mit den Verbrauchern.

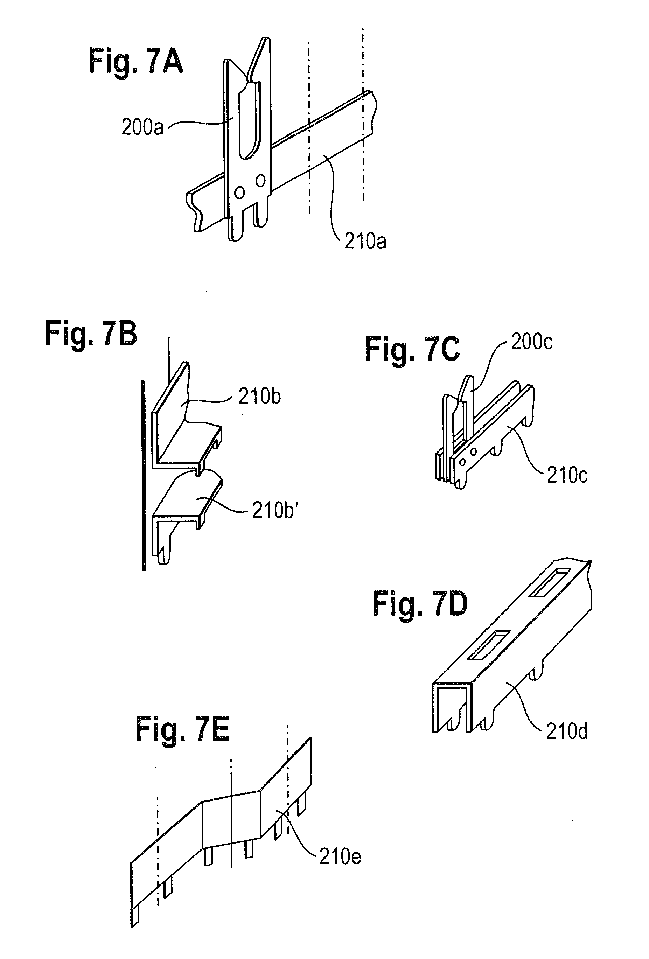

Zur Anpassung und/oder Erweiterung der technischen Spezifikationen des Stromverteilers zeigen die Figuren 7A bis 7E verschiedene Ausführungsformen von Stromschienen 210a bis 210e, teilweise verbunden mit Lamellenkontakten 200a und 200c. Die Stromschienen 210a bis 210e können mit gängigen Lötpins und/oder Einsteckkontakten und/oder mithilfe anderer Kontakte auf der Platine und/oder mit den Universalmodulen verbunden werden. Somit können abhängig von den angeschlossenen Verbrauchern auf der Basisplatine, d. h. der Platine des Basismoduls, oder beim Anschluss der Universalmodule unterschiedliche, auch hohe, Stromtragefähigkeiten realisiert werden, für die die auf der Platine vorgesehenen Leitungswege nicht ausreichend dimensioniert sind.

Es sind verschiedene Geometrien bei der Gestaltung der Stromschiene denkbar. Die Stromschiene kann beispielsweise als Metallband (Fig. 7A), Doppelschiene (Figuren 7B und 7C), L-förmig (Fig. 7B), U-förmig (Fig. 7D) ausgebildet sein. Teilweise sind in den Figuren 7A bis 7E Verbindungspunkte der Stromschienen und/oder Lamellenkontakte mit dafür vorgesehenen Verbindungsstellen des Stromverteilers vorgesehen.

Weitere Ausführungsformen der Erfindung sind im Folgenden aufgelistet:
1. Stromverteiler zur Verwendung in Fahrzeugen, mit einem eine zentrale Stromzufuhr (5) aufweisenden Basismodul (1) und wenigstens zwei Universalmodulen (100a, 100b), so dass ein modularer Aufbau des Stromverteilers realisiert wird, wobei die Universalmodule (100a, 100b) definierte Geometrien aufweisen, mit dem Basismodul (1) an dafür vorgesehenen Stellen sowohl mechanisch als auch elektrisch lösbar verbunden werden können und jeweils wenigstens ein elektrisches Bauteil enthalten, dadurch gekennzeichnet, dass das Basismodul (1) eine Platine (4) mit Strom leitenden Pfaden und/oder zumindest einer Stromschiene, sowie Kontaktanschlüsse zur Verbindung mit Verbrauchern des Fahrzeugs aufweist.
2. Stromverteiler nach 1, dadurch gekennzeichnet, dass die Platine (4) des Basismoduls (1) elektrische Bauteile aufweist.
3. Stromverteiler nach 1 oder 2, dadurch gekennzeichnet, dass mehrere Universalmodule (100a, 100b) identisch ausgebildete Schnittstellen (110a, 110b) zur mechanischen und elektrischen Verbindung mit dem Basismodul (1) aufweisen.
4. Stromverteiler nach 1, 2 oder 3, dadurch gekennzeichnet, dass die elektrische und mechanische Kontaktierung der Universalmodule (100a, 100b) in dafür vorgesehenen Ausbuchtungen des Basismoduls (1) erfolgt.
5. Stromverteiler nach 1, 2, 3 oder 4, dadurch gekennzeichnet, dass die mechanische Verbindung zwischen den Universalmodulen (100a, 100b) und dem Basismodul (1) über Führungen (111a, 111b) erfolgt, wobei im Basismodul (1) jeweils zumindest ein Stift vorgesehen ist, der mit einer entsprechenden Öffnung in dem entsprechenden Universalmodul (100a, 100b) in Eingriff, einbringbar und/oder durchdringbar ist.
6. Stromverteiler nach 1, 2, 3, 4 oder 5 der vorhergehenden Ansprüche, dadurch gekennzeichnet, dass der elektrische Kontakt zwischen den Universalmodulen (100a, 100b) und dem Basismodul (1) über einen Messerkontakt (112a, 112b) am Universalmodul (100a, 100b) und einen Lamellenkontakt (12a, 12b) an der zur Kontaktierung vorgesehenen Stelle am Basismodul (1) herbeigeführt wird.
7. Stromverteiler nach 6, dadurch gekennzeichnet, dass zumindest einer der zur Kontaktierung vorgesehenen Lamellenkontakte (12a, 12b, 200a - 200e) an einer im oder am Basismodul (1) vorgesehen Stromschiene (210a - 210e) befestigt ist.
8. Stromverteiler nach 7, dadurch gekennzeichnet, dass die Stromschiene (210a - 210e) mit der Platine (4) über Lötverbindungen oder Einsteckkontakte verbunden ist.
9. Stromverteiler nach 7 oder 8, dadurch gekennzeichnet, dass die Stromschiene (210a - 210e) L-förmig, als Metallband, als Doppelschiene und/oder U-förmig ausgebildet ist.
10. Elektrisches Bauteil als Halbzeug zur Weiterverarbeitung in Fahrzeugen, mit einer Stromschiene (210a - 210e) und einem daran angebrachten Lamellenkontakt (200a - 200e).
11. Elektrisches Bauteil nach 10, dadurch gekennzeichnet, dass es als Modul über Lötverbindungen oder Einsteckkontakte mit einer Platine (4) des Stromverteilers nach einem der Ansprüche 1 bis 9 verbindbar ist.
12. Elektrisches Bauteil nach 10 oder 11, dadurch gekennzeichnet, dass die Stromschiene (210a - 210e) L-förmig, als Metallband, als Doppelschiene und/oder U-förmig ausgebildet ist.
13. Elektrisches Bauteil nach 10, 11 oder 12, dadurch gekennzeichnet, dass der Lamellenkontakt (200a - 200e) als Einpresskontakt ausgestaltet ist.
14. Elektrisches Bauteil nach 10, 11, 12 oder 13, dadurch gekennzeichnet, dass die Stromschiene (210a - 210e) mehrere daran befestigte Lamellenkontakte (200a - 200e) aufweist.

## Patentansprüche

1. Elektrisches Bauteil als Halbzeug zur Weiterverarbeitung in Fahrzeugen, mit einer Stromschiene (210a - 210e) und einem daran angebrachten Lamellenkontakt (200a - 200e), wobei die Stromschiene (210a - 210e) als Doppelschiene und/oder U-förmig ausgebildet ist.

2. Elektrisches Bauteil nach Anspruch 1, **dadurch gekennzeichnet, dass** es als Modul über Lötverbindungen oder Einsteckkontakte mit einer Platine (4) des Stromverteilers nach einem der Ansprüche 1 bis 9 verbindbar ist.

3. Elektrisches Bauteil nach Anspruch 1 oder 2, **dadurch gekennzeichnet, dass** der Lamellenkontakt (200a - 200e) als Einpresskontakt ausgestaltet ist.

4. Elektrisches Bauteil nach einem der Ansprüche 1 bis 3, **dadurch gekennzeichnet, dass** die Stromschiene (210a - 210e) mehrere daran befestigte Lamellenkontakte (200a - 200e) aufweist.
